# FASCICULE DE BREVET EUROPEEN

(11) **EP 3 905 044 B1**
(45) Date de publication et mention de la délivrance du brevet: **10.05.2023**
(21) Numéro de dépôt: 20305418.4
(22) Date de dépôt: 30.04.2020
(51) Int. Cl.: G06F 11/07, G06F 11/22, G06F 11/36, G06N 3/04, G06N 3/08

(54) **PROCÉDÉ D'ANALYSE AUTOMATIQUE DES JOURNAUX DE TRANSACTIONS D'UN SYSTÈME INFORMATIQUE DISTRIBUÉ**
AUTOMATISCHES ANALYSEVERFAHREN DER TRANSAKTIONSPROTOKOLLE EINES VERTEILTEN IT-SYSTEMS
METHOD FOR AUTOMATIC ANALYSIS OF THE TRANSACTION LOGS OF A DISTRIBUTED COMPUTER SYSTEM

(43) Date de publication de la demande: 03.11.2021
(73) Titulaire: Bull SAS, 78340 Les Clayes-sous-Bois (FR)
(72) Inventeur: PLATINI, Marc, 38100 Grenoble (FR); PELLETIER, Benoit, 38960 Saint Etienne de Crossey (FR); PAULETTO, Loic, 38000 Grenoble (FR)
(74) Mandataire: Cabinet Camus Lebkiri

(56) Documents cités:
- WO-A1-2017/087440
- US-A1- 2017 293 542
- US-A1- 2019 243 743

## Description

### DOMAINE TECHNIQUE DE L'INVENTION

Le domaine technique de l'invention est celui des systèmes informatiques distribués et en particulier celui de l'analyse des journaux de transactions des systèmes informatiques distribués.

La présente invention concerne un procédé d'analyse d'au moins un journal de transactions d'un système informatique distribué et en particulier un procédé d'analyse automatique d'au moins un journal de transactions d'un système informatique distribué.

### ARRIERE-PLAN TECHNOLOGIQUE DE L'INVENTION

Les journaux de transactions, ou journaux de logs, des systèmes informatiques distribués sont des sources d'informations très utiles dans de nombreux cas comme par exemple, la découverte de la cause racine d'une erreur, l'aide à l'installation ou encore le "débogage" automatique.

Cependant, l'analyse complète de ces journaux de transactions par un utilisateur, notamment l'identification d'événements survenus et les relations de causalité entre les différents événements identifiés, est extrêmement difficile, voire impossible dans certains cas, même pour un utilisateur expérimenté.

Un premier problème rencontré par un utilisateur est la difficulté d'analyser un fichier de la taille d'un journal de transactions, qui, dans le cas des systèmes informatiques distribués à grande échelle et en particulier des supercalculateurs comme les supercalculateurs haute performance ou HPC (pour « High-Performance Computing »), peut atteindre plusieurs centaines de millions de lignes.

Un deuxième problème rencontré par un utilisateur est la difficulté d'établir des liens de causalité entre plusieurs événements associés chacun à plusieurs lignes, parfois séparés entre eux par plusieurs lignes associées à d'autres événements. En effet, pour un noeud donné du système informatique distribué, un journal de transactions agrège par date de réception, des messages provenant de plusieurs sources, comme par exemple de services proposés par le système informatique distribué ou d'autres éléments du système informatique distribué, comme par exemple les autres noeuds. Etant donné que chaque source envoie des messages indépendamment des autres sources, l'ordre des messages dans le journal de transactions est aléatoire, ce qui rend difficile la détermination pour un utilisateur, de relations de causalité entre les différents messages.

Pour résoudre le premier problème, des analyseurs automatiques de lignes ont été développés. Cependant, aucun de ces analyseurs n'est capable d'analyser des centaines de millions de lignes en un temps raisonnable, le plus rapide mettant 48 heures, ce qui est bien trop important compte tenu de la vitesse de remplissage d'un journal de transactions.

De plus, les analyseurs automatiques de l'état de la technique utilisés pour établir des causalités se concentrent uniquement sur un type d'événements, par exemple la détection de traffic HTTP, et sur des journaux de transaction considérés comme anormaux, et n'effectuent donc pas une analyse sur l'ensemble des événements survenus dans les journaux de transaction.

Il existe donc un besoin pour un utilisateur d'obtenir une analyse automatique et complète des journaux de transaction d'un système informatique distribué, et notamment les relations de causalité entre les différents événements survenus, en un temps compatible avec le temps de remplissage d'un journal de transaction, c'est-à-dire en une heure maximum.

Le document US 2019/243743 divulgue un procédé d'analyse automatique d'au moins un journal de transactions comportant une pluralité de lignes d'un système informatique distribué. Ledit document divulgue également un réseau de neurones capable de prédire les prochaines lignes du journal de transactions dans une fenêtre de temps à partir de clés déterminées pour les lignes du journal de transactions.

Le document WO2017/087440 divulgue le recours à un graphe de causalité par évènement pour détecter des anomalies dans un journal de transactions.

### RESUME DE L'INVENTION

L'invention offre une solution aux problèmes évoqués précédemment, en permettant de réaliser une analyse complète des journaux de transaction d'un système informatique distribué sans intervention de l'utilisateur et en moins d'une heure.

Un premier aspect de l'invention concerne un procédé d'analyse automatique d'au moins un journal de transactions d'un système informatique distribué, comportant une pluralité de lignes, le procédé comportant les étapes suivantes : - Pour chaque ligne du journal de transactions: o Découper la ligne en mots, chaque mot étant associé à une position sur la ligne, et associer la ligne à une taille se définissant comme le nombre de mots; o Remplacer chaque mot par un descripteur; o Construire un vecteur de comparaison en comparant la ligne avec les autres lignes du journal de transactions associées à la même taille que ladite ligne, le vecteur de comparaison comprenant pour chaque mot, une occurrence correspondant au nombre de fois où le descripteur correspondant au mot apparaît à la position associée au mot, dans une autre ligne du journal de transactions associée à la même taille que la ligne; o Construire un motif à partir d'au moins un mot de la ligne à partir du vecteur de comparaison, le motif comprenant chaque descripteur de la ligne associé à une occurrence apparaissant un nombre maximal de fois dans le vecteur de comparaison; - Créer un événement par motif, chaque événement étant associé au nombre de lignes ayant pour motif le motif correspondant à l'événement; - Entraîner de manière non supervisée un réseau de neurones artificiels sur un groupe d'événements d'entraînement comportant au moins un événement, correspondant à un ensemble de lignes d'entraînement comprenant une pluralité de lignes du journal de transactions, pour prédire le prochain événement qui aura lieu dans le journal de transactions; - Pour au moins un événement: o Utiliser le réseau de neurones artificiels pour prédire l'événement comme prochain événement qui aura lieu dans le journal de transactions, à partir d'un groupe d'événements de prédiction comprenant au moins un événement ayant eu lieu avant l'événement dans le journal de transactions; o Générer à partir du réseau de neurones artificiels, un graphe de causalité de l'événement comprenant une relation causale pour chaque événement du groupe d'événements de prédiction répondant à une condition de pertinence.

Ainsi, en choisissant des descripteurs de manière que le nombre total de descripteurs utilisés pour les lignes du journal de transactions soit inférieur au nombre total de mots des lignes du journal de transactions, et que les mots longs soient remplacés par des descripteurs plus courts, le temps de calcul et les ressources mémoire utilisées sont diminués. Ainsi aussi, au lieu de stocker chaque descripteur associé à un mot de chaque ligne pour pouvoir effectuer des comparaisons, on stocke une unique clé par descripteur situé à une position donnée, ce qui permet de diminuer les ressources mémoire utilisées,

Grâce à l'invention, des événements sont automatiquement identifiés à partir des lignes d'un journal de transactions et un graphe de causalité peut être automatiquement généré pour chaque événement du journal de transactions. Une vue agrégée du journal de transactions identifiant les causalités entre les événements d'un même journal de transactions ou entre les événements de plusieurs journaux de transactions, est ainsi obtenue. Le procédé selon l'invention permet d'analyser environ 600 millions de lignes en environ 150 secondes et peut avantageusement être mis en oeuvre par un traitement multifil ou multithreading en anglais.

Outre les caractéristiques qui viennent d'être évoquées dans le paragraphe précédent, le procédé selon le premier aspect de l'invention peut présenter une ou plusieurs caractéristiques complémentaires parmi les suivantes, considérées individuellement ou selon toutes les combinaisons techniquement possibles.

Selon une sous-variante de réalisation de la variante de réalisation précédente, l'étape de construction du vecteur de comparaison est réalisée à l'aide d'une table de hachage comportant une pluralité de clés composées chacune d'un descripteur et d'une position et étant chacune associées à l'occurrence correspondant au nombre de fois où le descripteur apparaît à la position dans une autre ligne du journal de transactions associée à la même taille que la ligne.

Selon une sous-variante de réalisation de la variante de réalisation précédente compatible avec la sous-variante de réalisation précédente, le motif comprend chaque descripteur de la ligne associé à une occurrence apparaissant un nombre maximal de fois dans le vecteur de comparaison.

Ainsi, le motif d'une ligne correspond à la partie constante de la ligne qui permet d'identifier un type d'événement.

Selon une variante de réalisation compatible avec les variantes de réalisation précédente, le réseau de neurones artificiels est un réseau de neurones artificiels de type mémoire à long court terme ou Long Short-Term Memory.

Ainsi, le réseau de neurones artificiels est un réseau de neurones artificiels particulièrement adapté à l'apprentissage de corrélations temporelles, connu pour être très précis pour le traitement du langage naturel ou Natural Language Processing en anglais.

Selon une variante de réalisation compatible avec les variantes de réalisation précédente, l'étape d'entraînement du réseau de neurones artificiels est réalisée pour au moins un sous-groupe d'événements du groupe d'événements d'entraînement, chaque sous-groupe d'événements regroupant chaque événement du groupe d'événements d'entraînement présentant une même cardinalité, la cardinalité d'un événement se définissant comme la puissance de 10 du nombre de lignes associé à l'événement.

Ainsi, l'entraînement est construit pour un groupe d'événements similaires et pas pour chaque événement, ce qui permet de diminuer le temps de calcul et les ressources mémoire utilisées, et d'augmenter les performances de prédiction.

Selon une variante de réalisation compatible avec les variantes de réalisation précédente, l'étape d'entraînement du réseau de neurones artificiels est précédée d'une étape de construction, pour chaque événement, d'un vecteur numérique comprenant une valeur de similarité linguistique pour au moins un autre événement.

Ainsi, le réseau de neurones artificiels qui utilise les vecteurs numériques d'un groupe d'événements pour prédire le prochain événement, réalise sa prédiction en prenant en compte la proximité de sens entre les mots des événements du groupe d'événements, ce qui augmente la précision de sa prédiction.

Selon une variante de réalisation compatible avec les variantes de réalisation précédente, le réseau de neurones artificiels comprend une couche d'attention et l'étape d'entraînement du réseau de neurones artificiels comporte une sous-étape de génération d'un vecteur de poids par la couche d'attention, le vecteur de poids comprenant un poids pour chaque autre événement du groupe d'événements de prédiction.

Ainsi, la couche d'attention évalue l'importance de chaque événement dans la prédiction fournie par le réseau de neurones artificiels pour identifier des relations causales entre l'événement prédit et les événements utilisés pour la prédiction.

Selon une sous-variante de réalisation de la variante de réalisation précédente, la condition de pertinence est vérifiée pour un événement donné si le poids du vecteur de poids correspondant à l'événement est supérieur à un seuil, le seuil étant la somme de la moyenne des poids du vecteur de poids et de l'écart type des poids du vecteur de poids.

Ainsi, seuls les événements associés à un poids suffisamment important sont considérés comme ayant une relation causale avec l'événement prédit.

Un deuxième aspect de l'invention concerne un produit-programme d'ordinateur comprenant des instructions qui, quand le programme est exécuté sur un ordinateur, conduisent celui-ci à mettre en oeuvre les étapes du procédé selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé selon l'invention.
- La figure 2 est une représentation schématique d'un journal de transactions et de plusieurs événements associés obtenus par le procédé selon l'invention.
- La figure 3 est une représentation schématique d'un réseau de neurones artificiels permettant la mise en oeuvre du procédé selon l'invention.
   La figure 4 est une représentation schématique d'un graphe de causalité généré par le procédé selon l'invention pour un événement donné.

### DESCRIPTION DETAILLEE

Sauf précision contraire, un même élément apparaissant sur des figures différentes présente une référence unique.

Un premier aspect de l'invention concerne un procédé d'analyse automatique d'au moins un journal de transactions, autrement appelé journal de logs, d'un système informatique distribué.

On entend par « analyse automatique », une analyse mise en oeuvre par ordinateur et menée sans qu'aucun paramétrage de l'utilisateur ne soit nécessaire.

Le procédé selon l'invention est mis en oeuvre par un calculateur comportant au moins un processeur et une mémoire.

Le système informatique distribué est par exemple un système informatique distribué à grande échelle, comme par exemple un supercalculateur haute performance autrement appelé supercalculateur HPC (pour « High-Performance Computing »).

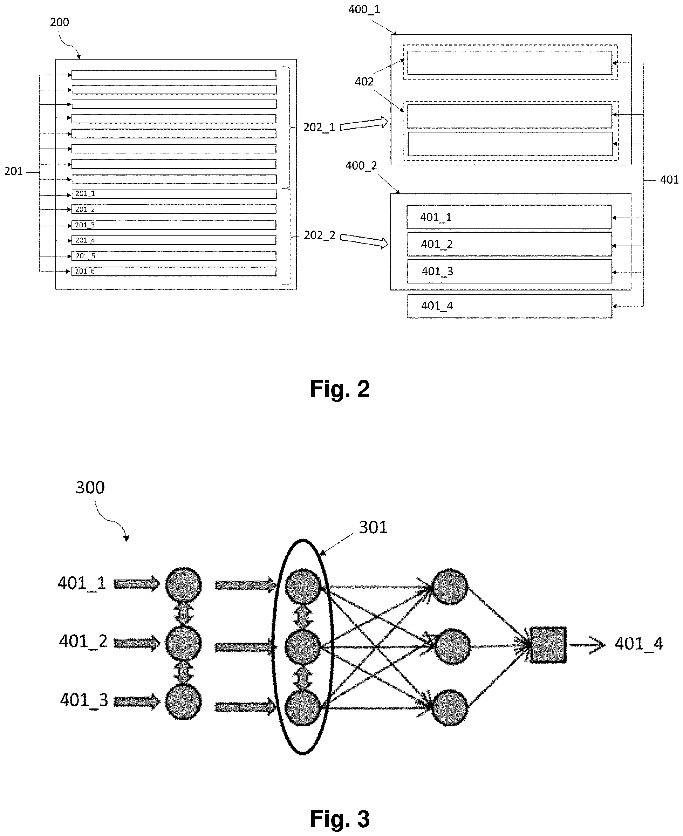

[Fig. 2] La figure 2 montre une représentation schématique d'un journal de transactions 200.

Un journal de transactions 200 comporte une pluralité de lignes 201.

Sur la figure 2, le journal de transactions 200 comporte quatorze lignes 201 divisées en un premier ensemble 202_1 de lignes 201 comprenant huit lignes 201, et un deuxième ensemble 202_2 de lignes 201 comprenant six lignes 201 référencées 201_1, 201_2, 201_3, 201_4, 201_5, 201_6.

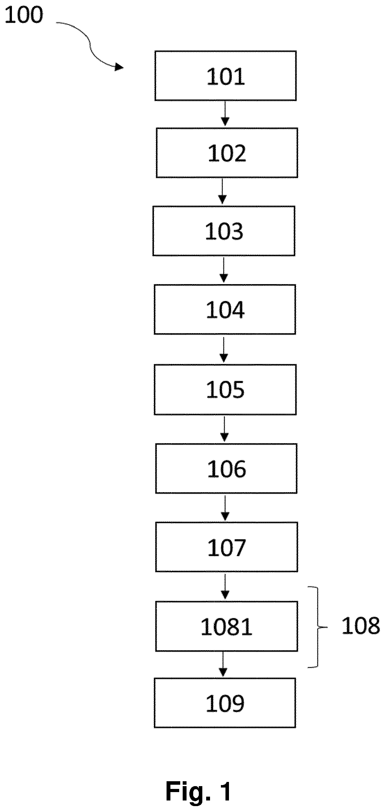

[Fig. 1] la figure 1 est un schéma synoptique illustrant l'enchaînement des étapes du procédé 100 selon l'invention.

Une première étape 101 du procédé 100 consiste à découper chaque ligne 201 du journal de transactions 200 en mots.

Pour cela, des séparateurs sont utilisés pour séparer deux mots consécutifs, comme par exemple les espaces et/ou les virgules et/ou les deux points et/ou les signes égal.

Considérons un exemple dans lequel le journal de transactions 200 comporte uniquement les lignes 201 du deuxième ensemble 202_2 de lignes 201 dans lequel :
- la ligne 201_1 est : delai attente depasse vers stockage
- la ligne 201_2 est : connexion utilisateur A2563
- la ligne 201_3 est : perte connexion stockage
- la ligne 201_4 est : connexion utilisateur D4567
- la ligne 201_5 est : erreur accès fichier image.png
- la ligne 201_6 est : erreur accès fichier save.png

A l'issue de la première étape 101, on obtient pour l'exemple précédent :
- la ligne 201_1 est : [delai] [attente] [depasse] [vers] [stockage]
- la ligne 201_2 est : [connexion] [utilisateur] [A2563]
- la ligne 201_3 est : [perte] [connexion] [stockage]
- la ligne 201_4 est : [connexion] [utilisateur] [D4567]
- la ligne 201_5 est : [erreur] [acces] [fichier] [image.png]
- la ligne 201_6 est : [erreur] [acces] [fichier] [save.png]
Avec chaque mot placé entre crochets.

Chaque mot est associé à une position sur la ligne 201. Par exemple, dans la ligne 201_2, le mot [connexion] est associée à la position 1, le mot [utilisateur] à la position 2 et le mot [A2563] à la position 3.

La première étape 101 consiste ensuite à associer à chaque ligne 201 une taille correspondant au nombre de mots dans la ligne 201.

Ainsi, pour l'exemple précédent :
- la ligne 201_1 a une valeur de taille égale à 5.
- la ligne 201_2 a une valeur de taille égale à 3.
- la ligne 201_3 a une valeur de taille égale à 3.
- la ligne 201_4 a une valeur de taille égale à 3.
- la ligne 201_5 a une valeur de taille égale à 4.
- la ligne 201_6 a une valeur de taille égale à 4.

Le procédé 100 selon l'invention comporte une deuxième étape 102 consistant à remplacer chaque mot identifié à la première étape 101 par un descripteur.

Pour cela, chaque mot contenant uniquement des lettres est par exemple associé au mot lui-même, chaque mot contenant uniquement des caractères alphanumériques à NB, et chaque autre type de mots à un vecteur comportant cinq entrées, la première entrée étant un booléen décrivant la présence ou non de caractères numériques, la deuxième entrée étant un booléen décrivant la présence ou non de lettres majuscules, la troisième entrée étant un booléen décrivant la présence ou non de lettres minuscules, la quatrième entrée étant un booléen décrivant la présence ou non de caractères non-alphanumériques, et la cinquième entrée étant la taille du mot.

On entend par « l'entrée est un booléen décrivant la présence ou non d'un élément », que l'entrée vaut 0 si l'élément est absent et 1 si l'élément est présent.

Chaque autre type de mots pourrait par exemple être également remplacé par NB.

Ainsi, pour l'exemple précédent, à l'issue de la deuxième étape 102, on obtient :
- la ligne 201_1 est : [delai] [attente] [depasse] [vers] [stockage]
- la ligne 201_2 est : [connexion] [utilisateur] [(1, 1, 0, 0, 5)]
- la ligne 201_3 est : [perte] [connexion] [stockage]
- la ligne 201_4 est : [connexion] [utilisateur] [(1, 1, 0, 0, 5)]
- la ligne 201_5 est : [erreur] [acces] [fichier] [(1, 0, 0, 1, 9)]
- la ligne 201_6 est : [erreur] [acces] [fichier] [(1, 0, 0, 1, 8)]

Une troisième étape 103 du procédé 100 consiste à construire un vecteur de comparaison pour chaque ligne 201 du journal de transactions 200.

Le vecteur de comparaison d'une ligne 201 est construit par comparaison entre la ligne 201 et chaque autre ligne 201 du journal de transactions 200 ayant la même taille que la ligne 201 pour laquelle le vecteur de comparaison est construit.

Ainsi, en reprenant l'exemple précédent, lors de la troisième étape 103, les ligne 201_2, 201_3 et 201_4 de taille 3 sont comparées entre elles et les ligne 201_5 et 201 _6 de taille 4 sont comparées entre elles.

Le vecteur de comparaison comporte par exemple pour chaque mot de la ligne 201, le nombre de fois où le mot apparaît à la position associée au mot, dans une autre ligne 201 du journal de transactions 200 de même taille que la ligne 201 pour laquelle le vecteur de comparaison est construit.

Le vecteur de comparaison comporte par exemple pour chaque mot de la ligne 201, le nombre de fois où le descripteur correspondant au mot apparaît à la position associée au mot, dans une autre ligne 201 du journal de transactions 200 de même taille que la ligne 201 pour laquelle le vecteur de comparaison est construit.

Ainsi, à l'issue de la troisième étape 103 :
- la ligne 201_1 a pour vecteur de comparaison : (0, 0, 0, 0, 0)
- la ligne 201_2 a pour vecteur de comparaison : (1, 1, 1)
- la ligne 201_3 a pour vecteur de comparaison : (0, 0, 0)
- la ligne 201_4 a pour vecteur de comparaison : (1, 1, 1)
- la ligne 201_5 a pour vecteur de comparaison : (1, 1, 1, 0)
- la ligne 201_6 a pour vecteur de comparaison : (1, 1, 1 ; 0)

La troisième étape 103 peut être réalisée à l'aide d'une table de hachage stockant une pluralité de clés associées chacune à une occurrence. Chaque clé est composée d'un mot ou d'un descripteur et d'une position et l'occurrence correspond au nombre de fois où le mot ou descripteur apparaît à la position dans une autre ligne 201 du journal de transactions 200 associée à la même taille que la ligne 201.

Le nombre de clés stockées dans la table de hachage est alors égal au nombre de mots différents pour chaque position possible pour chaque ligne 201 du journal de transactions 200.

Une quatrième étape 104 du procédé 100 consiste à construire un motif pour chaque ligne 201 du journal de transactions 200, à partir du vecteur de comparaison construit à la troisième étape 103 pour la ligne 201.

Chaque ligne 201 comporte une partie constante et une partie variable, la partie constante étant liée à un type d'événement survenu et la partie variable, aux circonstances de survenue de l'événement.

Par exemple, si la ligne est : connexion utilisateur U1, la partie constante est connexion utilisateur et la partie variable est U1. Le type d'événement est donc une connexion d'un utilisateur et la partie variable est l'identifiant de l'utilisateur qui s'est connecté.

Par exemple, si la ligne est : changement température de 2 vers 5, la partie constante est changement température de * vers * et la partie variable est 2 * 5. Le type d'événement est donc un changement de température et la partie variable est la valeur de la température précédente et la valeur de la température actuelle.

Le motif correspond à la partie constante de la ligne 201.

Le motif comprend par exemple chaque mot ou chaque descripteur de la ligne 201 associé à une occurrence apparaissant un nombre maximal de fois dans le vecteur de comparaison.

Par exemple, si le vecteur de comparaison est [25, 16, 16, 16, 25, 1], l'occurrence « 25 » apparaît deux fois, l'occurrence « 16 » apparaît 3 fois et l'occurrence « 1 » apparaît 1 fois. L'occurrence apparaissant un nombre maximal de fois est donc l'occurrence « 16 » et le motif comprend donc les mots ou descripteurs en position 2, 3 et 4 dans la ligne 201.

Ainsi, pour l'exemple précédent :
- le motif associé à la ligne 201_1 est : delai attente depasse vers stockage
- le motif associé à la ligne 201_2 est : connexion utilisateur (1, 1, 0, 0, 5)
- le motif associé à la ligne 201 _3 est : perte connexion stockage
- le motif associé à la ligne 201_4 est : connexion utilisateur (1, 1, 0, 0, 5)
- le motif associé à la ligne 201 _5 est : erreur accès fichier
- le motif associé à la ligne 201 _6 est : erreur accès fichier

Une cinquième étape 105 du procédé 100 consiste à créer un événement 401 pour chaque motif construit à la quatrième étape 104.

Ainsi, pour l'exemple précédent :
- un événement 401_1 est créé pour le motif : delai attente depasse vers stockage
- un événement 401_2 est créé pour le motif : connexion utilisateur (1, 1, 0, 0, 5)
- un événement 401 _3 est créé pour le motif : perte connexion stockage
- un événement 401 _4 est créé pour le motif : erreur accès fichier

Chaque événement 401 est associé au nombre de lignes 201 ayant pour motif le motif correspondant à l'événement 401.

Ainsi, pour l'exemple précédent, l'événement 401_1 est associé à la ligne 201_1, l'événement 401 _2 est associé aux deux lignes 201 _2 et 201 _4, l'événement 401 _3 est associé à la ligne 201 _3 et l'événement 401 _4 est associé aux deux lignes 201_5 et 201_6.

Le procédé 100 selon l'invention peut comporter une sixième étape 106 consistant à construire pour chaque événement 401, un vecteur numérique comprenant une valeur de similarité linguistique pour au moins un autre événement 401.

Ainsi, plus le motif associé à un premier événement 401 a un sens proche de celui du motif associé à un deuxième événement 401, plus la valeur de similarité linguistique entre le premier événement 401 et le deuxième événement 401 est importante.

Par exemple, si le premier événement 401 a pour motif [calculateur] et que le deuxième événement 401 a pour motif [serveur], la valeur de similarité linguistique est importante car le sens des deux motifs est proche. En revanche, si le deuxième événement 401 a pour motif [utilisateur], la valeur de similarité linguistique va être plus faible car le sens des deux motifs est plus éloigné.

La sixième étape 106 est par exemple réalisée par le modèle Word2vec. Le modèle Word2vec est utilisé pour le plongement lexical et est constitué de réseaux de neurones artificiels à deux couches entraînés pour reconstruire le contexte linguistique des mots.

Le modèle Word2vec est par exemple entraîné sur des événements 401 rangés dans le même ordre que les lignes 201 correspondantes dans le journal de transactions 200 pour que le modèle Word2vec fournisse des vecteurs numériques proches pour des événements 401 correspondants à des lignes 201 apparaissant consécutivement dans le journal de transactions 200.

Le procédé 100 selon l'invention comporte une septième étape 107 consistant à construire au moins un modèle de prédiction permettant de prédire le prochain événement 401 qui aura lieu dans le journal de transactions 200.

Le modèle de prédiction est construit par un réseau de neurones artificiels en l'entraînant de manière non supervisée sur une base de données d'entraînement comportant des données liées à un groupe d'événements 401 d'entraînement.

Sur la figure 2, le groupe 400_1 d'événements 401 d'entraînement comporte les événements 401 correspondant au premier ensemble 202_1 de lignes 201 du journal de transactions 200 utilisé comme ensemble 202_1 de lignes 201 d'entraînement.

L'ensemble 202_1 de lignes 201 d'entraînement correspond par exemple à 60% des lignes 201 du journal de transactions 200.

Dans le cas où la sixième étape 106 a été réalisée, la base de données d'entraînement comporte par exemple les vecteurs numériques associés aux événements 401 du groupe 400_1 d'événements 401 d'entraînement.

Le réseau de neurones artificiels est alors par exemple entraîné sur les vecteurs numériques associés aux événements 401 du groupe 400_1 d'événements 401 d'entraînement.

Dans le cas où la sixième étape 106 n'a pas été réalisée, la base de données d'entraînement comporte par exemple le groupe 400_1 d'événements 401 d'entraînement.

Le réseau de neurones artificiels est par exemple entraîné sur le groupe 400_1 d'événements 401 d'entraînement.

Un réseau de neurones artificiels comporte au moins deux couches comportant chacune au moins un neurone artificiel. Une connexion entre deux neurones est appelée une synapse. Chaque synapse est affectée d'un coefficient synaptique.

Entraîner un réseau de neurones artificiels consiste à déterminer les coefficients synaptiques du réseau de neurones artificiels lui permettant d'effectuer la tâche souhaitée à partir de la base de données d'entraînement.

La septième étape 107 consiste donc à déterminer les coefficients synaptiques du réseau de neurones artificiels lui permettant de prédire le prochain événement 401 qui aura lieu dans le journal de transactions 200 à partir du groupe 400_1 d'événements 401 d'entraînement.

L'entraînement est non supervisé donc aucune information supplémentaire n'est fournie au réseau de neurones artificiels.

[Fig. 3] La figure 3 est une représentation schématique du réseau de neurones artificiels 300 utilisé.

Sur la figure 3, le réseau de neurones artificiels 300 comporte une première couche appelée couche d'entrée comportant trois neurones artificiels, une deuxième couche comportant trois neurones artificiels, une troisième couche comportant trois neurones artificiels, et une quatrième couche appelée couche de sortie comportant un neurone artificiel.

La couche de sortie fournit une prédiction en fonction des données d'entrée fournies à la couche d'entrée et des coefficients synaptiques du réseau de neurones artificiels 300.

Une fois le réseau de neurones artificiels 300 entraîné, la couche de sortie fournit le prochain événement 401 qui aura lieu dans le journal de transactions 200.

Le réseau de neurones artificiels 300 est par exemple un réseau de neurones artificiels de type mémoire à long court terme ou Long-Short Term Memory.

La septième étape 107 est par exemple réalisée pour au moins un sous-groupe 402 d'événements 401 du groupe 400_1 d'événements 401 d'entraînement sur lequel est entraîné le réseau de neurones artificiels 300, c'est-à-dire que pour au moins un sous-groupe 402 d'événements 401 du groupe 400_1 d'événements 401 d'entraînement, un modèle de prédiction associé au sous-groupe 402 d'événements 401 est construit.

Le modèle de prédiction associé à un sous-groupe 402 d'événements 401 est configuré pour prédire un événement 401 appartenant au sous-groupe 402 d'événements 401.

Un sous-groupe 402 d'événements 401 regroupe par exemple une pluralité d'événements 401 du groupe 400_1 d'événements 401 d'entraînement présentant une même cardinalité.

On entend par «cardinalité d'un événement », la puissance de 10 du nombre de lignes 201 associé à l'événement 401.

Par exemple, si un événement 401 est associé à 1135 lignes 201, sa cardinalité est de 3 puisque l'événement 401 est associé 1,135×10³ lignes 201.

Ainsi, le modèle de prédiction associé à un sous-groupe 402 d'événements 401 de cardinalité C est configuré pour prédire un événement 401 de cardinalité C.

En revanche, la base de données d'entraînement utilisée pour construire un modèle de prédiction associé à un sous-groupe 402 d'événements 401 de cardinalité C ne comporte pas forcément que des données liées à des événements 401 de cardinalité C.

Sur la figure 2, le groupe 400_1 d'événements 401 d'entraînement comporte un premier sous-groupe 402 d'événements 401 comportant un événement 401 ayant une cardinalité C1 et un deuxième sous-groupe 402 d'événements 401 comportant deux événements 401 ayant une cardinalité C2.

Ainsi, le procédé 100 selon l'invention peut par exemple comporter une première septième étape 107 permettant d'obtenir un modèle de prédiction prédisant des événements 401 de cardinalité C1 et une deuxième septième étape 107 permettant d'obtenir un modèle de prédiction prédisant des événements 401 de cardinalité C2.

Le réseau de neurones artificiels 300 comporte par exemple une couche d'attention 301.

Sur la figure 3, la deuxième couche du réseau de neurones artificiels 300 est une couche d'attention 301 et la troisième couche est une couche à interconnexion intégrale ou couche fully-connected.

La couche d'attention 301 est par exemple une couche à attention temporelle contrôlée ou Temporal Attention Gated.

Le réseau de neurones artificiels 300 est par exemple un réseau de neurones artificiels de type Long-Short Term Memory bidirectionnel comportant une couche d'entrée, 50 couches cachées, une couche d'attention 301, une couche fully-connected et une couche de sortie.

Le procédé 100 selon l'invention comporte une huitième étape 108 consistant, pour un événement 401 donné, à utiliser le modèle de prédiction construit à la septième étape 107 pour prédire l'événement 401, à partir d'un groupe d'événements 401 de prédiction. Le groupe d'événements de prédiction comporte au moins un événement 401 précédant l'événement 401 à prédire dans le journal de transactions 200.

Le groupe d'événements 401 de prédiction comporte par exemple les trente événements 401 précédant l'événement 401 à prédire, dans le journal de transactions 200.

Sur les figures 2 et 3, la huitième étape 108 consiste à prédire, à l'aide du réseau de neurones artificiels 300, l'événement 401 _4 à partir du groupe 400_2 d'événements 401 de prédiction comportant les événements 401_1, 401_2 et 401_3.

Dans le cas où la septième étape 107 a été réalisée pour une pluralité de sous-groupes 402 d'événements 401, le modèle de prédiction utilisé dans la huitième étape 108 est le modèle de prédiction associé à un sous-groupe 402 d'événements 401 ayant la même cardinalité que l'événement 401 à prédire.

La huitième étape 108 comporte par exemple une première sous-étape 1081 consistant pour la couche d'attention 301, à générer un vecteur de poids. Le vecteur de poids comprend au moins un poids pour un autre événement 401 du groupe 400_2 d'événements 401 de prédiction.

Dans le cas illustré aux figures 2 et 3, la couche d'attention 301 va générer un vecteur de poids comprenant un premier poids associé à l'événement 401_1, un deuxième poids associé à l'événement 401 _2 et un troisième poids associé à l'événement 401_3. Le vecteur de poids est par exemple (0,5 ; 0,1 ; 0,8).

Le procédé 100 selon l'invention comporte une neuvième étape 109 consistant à générer pour l'événement 401 pour lequel le modèle de prédiction a été utilisé à la septième étape 107, un graphe de causalité.

Un graphe de causalité comporte une relation causale avec chaque autre événement 401 du groupe 400_2 d'événements 401 de prédiction répondant à une condition de pertinence.

La condition de pertinence est par exemple vérifiée pour un événement 401 si le poids du vecteur de poids correspondant à l'événement 401 est supérieur à un seuil.

Le seuil est par exemple la somme de la moyenne des poids du vecteur de poids et de l'écart type des poids du vecteur de poids.

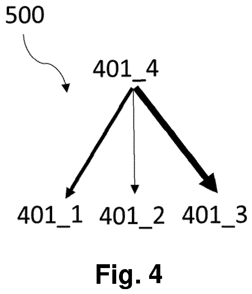

[Fig. 4] La figure 4 est une représentation schématique d'un graphe de causalité 500 généré à la huitième étape 108 du procédé 100 selon l'invention.

Sur la figure 4 est illustré le graphe de causalité 500 généré pour l'événement 401_4 du deuxième exemple.

Sur la figure 4, le graphe de causalité 500 comporte trois flèches représentant chacune une relation causale, une première relation causale avec l'événement 401_1, une deuxième relation causale avec l'événement 401_2 et une troisième relation causale avec l'événement 401_3.

Sur la figure 4, plus la flèche est épaisse, plus le poids associé à l'événement 401 dans le vecteur de poids est important et plus l'événement 401 pour lequel est généré le graphe de causalité 500 est lié à l'événement 401.

Comme le poids associé au deuxième événement 401 _3 est le plus important dans le vecteur de poids, l'événement 401 _3 est celui qui a le plus de chances d'entraîner l'événement 401_4.

En reprenant l'exemple précédent, cela signifie que l'événement 401_4 « erreur accès fichier » est entraîné par l'événement 401_3 « perte connexion stockage » et pas par exemple par l'événement 401 _2 « connexion utilisateur (1, 1, 0, 0, 5) ».

## Revendications

1. Procédé (100) d'analyse automatique d'au moins un journal de transactions (200) d'un système informatique distribué, comportant une pluralité de lignes (201), le procédé (100) comportant les étapes suivantes :
- Pour chaque ligne (201) du journal de transactions (200) :
∘ Découper la ligne (201) en mots, chaque mot étant associé à une position sur la ligne (201), et associer la ligne à une taille se définissant comme le nombre de mots (101) ;
∘ Remplacer chaque mot par un descripteur (102) ;
∘ Construire un vecteur de comparaison en comparant la ligne (201) avec les autres lignes (201) du journal de transactions (200) associées à la même taille que ladite ligne (201), le vecteur de comparaison comprenant pour chaque mot, une occurrence correspondant au nombre de fois où le descripteur correspondant au mot apparaît à la position associée au mot, dans une autre ligne (201) du journal de transactions (200) associée à la même taille que la ligne (201, 103) ;
∘ Construire un motif à partir d'au moins un mot de la ligne (201) à partir du vecteur de comparaison, le motif comprenant chaque descripteur de la ligne (201) associé à une occurrence apparaissant un nombre maximal de fois dans le vecteur de comparaison (104) ;
- Créer un événement (401) par motif, chaque événement (401) étant associé au nombre de lignes (201) ayant pour motif le motif correspondant à l'événement (401),(105);
- Entraîner de manière non supervisée un réseau de neurones artificiels (300) sur un groupe (400_1) d'événements (401) d'entraînement comportant au moins un événement (401), correspondant à un ensemble (202_1) de lignes (201) d'entraînement comprenant une pluralité de lignes (201) du journal de transactions (200), pour prédire le prochain événement (401) qui aura lieu dans le journal de transactions (200, 107) ;
- Pour au moins un événement (401) :
∘ Utiliser le réseau de neurones artificiels pour prédire l'événement (401) comme prochain événement (401) qui aura lieu dans le journal de transactions (200), à partir d'un groupe (400_2) d'événements de prédiction comprenant au moins un événement (401) ayant eu lieu avant l'événement (401) dans le journal de transactions (200, 108) ;
∘ Générer à partir du réseau de neurones artificiels, un graphe de causalité (500) de l'événement (401) comprenant une relation causale pour chaque événement (401) du groupe (400_2) d'événements (401) de prédiction répondant à une condition de pertinence (109).

2. Procédé (100) selon la revendication 1 dans lequel l'étape (103) de construction du vecteur de comparaison est réalisée à l'aide d'une table de hachage comportant une pluralité de clés composées chacune d'un descripteur et d'une position et étant chacune associées à l'occurrence correspondant au nombre de fois où le descripteur apparaît à la position dans une autre ligne (201) du journal de transactions (200) associée à la même taille que la ligne (201).

3. Procédé (100) selon l'une quelconque des revendications précédentes, dans lequel le réseau de neurones artificiels (300) est un réseau de neurones artificiels de type mémoire à long court terme ou Long Short-Term Memory.

4. Procédé (100) selon l'une quelconque des revendications précédentes, dans lequel l'étape (107) d'entraînement du réseau de neurones artificiels est réalisée pour au moins un sous-groupe (402) d'événements (401) du groupe (400_1) d'événements (401) d'entraînement, chaque sous-groupe (402) d'événements (401) regroupant chaque événement (401) du groupe (400_1) d'événements (401) d'entraînement présentant une même cardinalité, la cardinalité d'un événement (401) se définissant comme la puissance de 10 du nombre de lignes (201) associé à l'événement (401).

5. Procédé (100) selon l'une quelconque des revendications précédentes, dans lequel l'étape (107) d'entraînement du réseau de neurones artificiels est précédée d'une étape (106) de construction pour chaque événement (401), d'un vecteur numérique comprenant une valeur de similarité linguistique pour au moins un autre événement (401).

6. Procédé (100) selon l'une quelconque des revendications précédentes, dans lequel le réseau de neurones artificiels (300) comprend une couche d'attention (301) et l'étape (108) d'utilisation du réseau de neurones artificiels comporte une sous-étape (1081) de génération d'un vecteur de poids par la couche d'attention (301), le vecteur de poids comprenant un poids pour chaque événement (401) du groupe (400_2) d'événements (401) de prédiction.

7. Procédé (100) selon la revendication 6, dans lequel la condition de pertinence est vérifiée pour un événement (401) donné si le poids du vecteur de poids correspondant à l'événement (401) est supérieur à un seuil, le seuil étant la somme de la moyenne des poids du vecteur de poids et de l'écart type des poids du vecteur de poids.

8. Produit-programme d'ordinateur comprenant des instructions qui, quand le programme est exécuté sur un ordinateur, conduisent celui-ci à mettre en oeuvre les étapes du procédé (100) selon l'une quelconque des revendications précédentes.

## Patentansprüche

1. Verfahren (100) für eine automatische Analyse mindestens eines Transaktionsprotokolls (200) eines dezentralen Computersystems, das eine Vielzahl von Zeilen (201) aufweist, wobei das Verfahren (100) die folgenden Schritte aufweist:
- für jede Zeile (201) des Transaktionsprotokolls (200):
∘ Zerlegen der Zeile (201) in Wörter, wobei jedes Wort einer Position auf der Zeile (201) zugeordnet ist, und Zuordnen der Zeile zu einer Größe, die als die Anzahl der Wörter (101) definiert ist;
∘ Ersetzen jedes Wortes durch einen Deskriptor (102);
∘ Konstruieren eines Vergleichsvektors durch Vergleichen der Zeile (201) mit den anderen Zeilen (201) des Transaktionsprotokolls (200), die der gleichen Größe wie die Zeile (201) zugeordnet sind, der Vergleichsvektor umfassend für jedes Wort ein Auftreten, das der Anzahl von Malen entspricht, die der dem Wort entsprechende Deskriptor an der dem Wort zugeordneten Position in einer anderen Zeile (201) des Transaktionsprotokolls (200) erscheint, die der gleichen Größe wie die Zeile (201, 103) zugeordnet ist;
∘ Konstruieren eines Musters aus mindestens einem Wort der Zeile (201) aus dem Vergleichsvektor, das Muster umfassend jeden Deskriptor der Zeile (201), der einem Auftreten zugeordnet ist, das eine maximale Anzahl von Malen in dem Vergleichsvektor (104) erscheint;
- Erzeugen eines Ereignisses (401) pro Muster, wobei jedes Ereignis (401) der Anzahl von Zeilen (201) zugeordnet ist, die als Muster das dem Ereignis (401) entsprechende Muster haben (105);
- unüberwachtes Trainieren eines künstlichen neuronalen Netzes (300) an einer Gruppe (400_1) von Trainingsereignissen (401), die mindestens ein Ereignis (401) aufweist, die einem Satz (202_1) von Trainingszeilen (201) entspricht, umfassend eine Vielzahl von Zeilen (201) des Transaktionsprotokolls (200), um das nächste Ereignis (401) vorherzusagen, das in dem Transaktionsprotokoll (200, 107) stattfinden wird;
- für mindestens ein Ereignis (401):
∘ Verwenden des künstlichen neuronalen Netzes, um das Ereignis (401) als nächstes Ereignis (401) vorherzusagen, das in dem Transaktionsprotokoll (200) stattfinden wird, aus einer Gruppe (400_2) von Vorhersageereignissen, umfassend mindestens ein Ereignis (401), das vor dem Ereignis (401) in dem Transaktionsprotokoll (200, 108) stattgefunden hat;
∘ Generieren, aus dem künstlichen neuronalen Netz, eines Kausalitätsgraphen (500) des Ereignisses (401), umfassend eine kausale Beziehung für jedes Ereignis (401) der Gruppe (400_2) von Vorhersageereignissen (401), die eine Relevanzbedingung (109) erfüllen.

2. Verfahren (100) nach Anspruch 1, wobei der Schritt (103) des Konstruierens des Vergleichsvektors mittels einer Hash-Tabelle durchgeführt wird, die eine Vielzahl von Schlüsseln aufweist, die jeweils aus einem Deskriptor und einer Position bestehen und jeweils dem Auftreten zugeordnet sind, das der Anzahl von Malen entspricht, die der Deskriptor an der Position in einer anderen Zeile (201) des Transaktionsprotokolls (200) erscheint, die der gleichen Größe wie die Zeile (201) zugeordnet ist.

3. Verfahren (100) nach einem der vorstehenden Ansprüche, wobei das künstliche neuronale Netz (300) ein künstliches neuronales Netz von einem Typ langes Kurzzeitgedächtnis oder Long Short-Term Memory ist.

4. Verfahren (100) nach einem der vorstehenden Ansprüche, wobei der Schritt (107) des Trainierens des künstlichen neuronalen Netzes für mindestens eine Untergruppe (402) von Ereignissen (401) der Gruppe (400_1) von Trainingsereignissen (401) durchgeführt wird, wobei jede Untergruppe (402) von Ereignissen (401) jedes Ereignis (401) der Gruppe (400_1) von Trainingsereignissen (401), die eine gleiche Kardinalität aufweisen, umgruppiert, wobei die Kardinalität eines Ereignisses (401) als die Potenz von 10 der Anzahl von Zeilen (201) definiert ist, die dem Ereignis (401) zugeordnet ist.

5. Verfahren (100) nach einem der vorstehenden Ansprüche, wobei dem Schritt (107) des Trainierens des künstlichen neuronalen Netzes ein Schritt (106) des Konstruierens eines numerischen Vektors für jedes Ereignis (401) vorausgeht, umfassend einen Wert einer linguistischen Ähnlichkeit für mindestens ein anderes Ereignis (401).

6. Verfahren (100) nach einem der vorstehenden Ansprüche, wobei das künstliche neuronale Netz (300) eine Aufmerksamkeitsschicht (301) umfasst und der Schritt (108) des Verwendens des künstlichen neuronalen Netzes einen Unterschritt (1081) des Generierens eines Gewichtungsvektors durch die Aufmerksamkeitsschicht (301) aufweist, der Gewichtungsvektor umfassend ein Gewicht für jedes Ereignis (401) der Gruppe (400_2) von Vorhersageereignissen (401).

7. Verfahren (100) nach Anspruch 6, wobei die Relevanzbedingung für ein gegebenes Ereignis (401) überprüft wird, wenn das Gewicht des dem Ereignis (401) entsprechenden Gewichtsvektors größer als ein Schwellenwert ist, wobei der Schwellenwert die Summe aus dem Mittelwert der Gewichte des Gewichtsvektors und der Standardabweichung der Gewichte des Gewichtsvektors ist.

8. Computerprogrammprodukt, umfassend Anweisungen, die, wenn das Programm auf einem Computer ausgeführt wird, diesen veranlassen, die Schritte des Verfahrens (100) nach einem der vorstehenden Ansprüche zu implementieren.

## Claims

1. Method (100) for automatically analyzing at least one transaction log (200) of a distributed computer system, said log including a plurality of lines (201), the method (100) including the following steps:
- for each line (201) of the transaction log (200):
∘ cutting the line (201) into words, each word being associated with a position on the line (201), and associating the line with a size that is defined as the number of words (101);
∘ replacing each word with a descriptor (102);
∘ constructing a comparison vector by comparing the line (201) with the other lines (201) of the transaction log (200) associated with the same size as said line (201), the comparison vector comprising, for each word, an occurrence corresponding to the number of times the descriptor corresponding to the word appears, at the position associated with the word, in another line (201) of the transaction log (200) associated with the same size as the line (201, 103);
∘ constructing a pattern from at least one word of the line (201) from the comparison vector, the pattern comprising each descriptor of the line (201) associated with an occurrence appearing a maximum number of times in the comparison vector (104);
- creating an event (401) per pattern, each event (401) being associated with the number of lines (201) having, for a pattern, the pattern corresponding to the event (401), (105);
- training, in an unsupervised manner, an artificial neural network (300) on a group (400_1) of training events (401) including at least one event (401), corresponding to a set (202_1) of training lines (201) comprising a plurality of lines (201) of the transaction log (200), to predict the next event (401) that will take place in the transaction log (200, 107);
- for at least one event (401):
∘ using the artificial neural network to predict the event (401) as the next event (401) that will take place in the transaction log (200), from a group (400_2) of prediction events comprising at least one event (401) having occurred before the event (401) in the transaction log (200, 108);
∘ generating, from the artificial neural network, a causality graph (500) of the event (401) comprising a causal relationship for each event (401) of the group (400_2) of prediction events (401) meeting a relevance condition (109).

2. Method (100) according to claim 1, wherein the step (103) of constructing the comparison vector is performed using a hash table including a plurality of keys each composed of a descriptor and a position and each being associated with the occurrence corresponding to the number of times the descriptor appears at the position in another line (201) of the transaction log (200) associated with the same size as the line (201).

3. Method (100) according to either of the preceding claims, wherein the artificial neural network (300) is an artificial neural network of the long short-term memory type.

4. Method (100) according to any of the preceding claims, wherein the step (107) of training the artificial neural network is performed for at least one sub-group (402) of events (401) of the group (400_1) of training events (401), each sub- group (402) of events (401) grouping together each event (401) of the group (400_1) of training events (401) having the same cardinality, the cardinality of an event (401) being defined as the power of 10 of the number of lines (201) associated with the event (401).

5. Method (100) according to any of the preceding claims, wherein the step (107) of training the artificial neural network is preceded by a step (106) of constructing, for each event (401), a digital vector comprising a linguistic similarity value for at least one other event (401).

6. Method (100) according to any of the preceding claims, wherein the artificial neural network (300) comprises an attention layer (301) and the step (108) of using the artificial neural network includes a sub-step (1081) of generating a weight vector by means of the attention layer (301), the weight vector comprising a weight for each event (401) of the group (400_2) of prediction events (401).

7. Method (100) according to claim 6, wherein the relevance condition is verified for a given event (401) if the weight of the weight vector corresponding to the event (401) is greater than a threshold, the threshold being the sum of the average of the weights of the weight vector and the standard deviation of the weights of the weight vector.

8. Computer program product comprising instructions that, when the program is executed on a computer, lead the computer to implement the steps of the method (100) according to any of the preceding claims.
